# EUROPEAN PATENT APPLICATION

(11) **EP 2 230 484 A1**
(43) Date of publication of application: **22.09.2010**
(21) Application number: 10153643.1
(22) Date of filing: 15.02.2010
(51) Int. Cl.: G01C 19/72

(54) **Depolarizer for a fiber optic gyroscope (fog) using high birefringence photonic crystal fiber**

(30) Priority: 18.03.2009 US 406425
(71) Applicant: Honeywell International Inc., Morristown, NJ 07962 (US)
(72) Inventor: Strandjord, Lee, Morristown, NJ 07962-2245 (US); Williams, Wes, Morristown, NJ 07962-2245 (US)
(74) Representative: Buckley, Guy Julian

(57) **Abstract**

An environmentally robust fiber depolarizer for a fiber optic gyroscope. The depolarizer includes substantially a clockwise propagating leg and a counterclockwise propagating leg, distally coupled at opposite ends of a gyroscope sensing coil. The fiber depolarizer is formed of high birefringence photonic crystal fiber bonded segments. The fiber depolarizer reduces Shupe effect in a FOG and/or depolarizes the light anywhere in the optical circuit of a FOG. The Shupe effect reduction depolarizers may be packaged apart from the FOG sense coil, or wound in a symmetric pattern on the outer diameter of the FOG sense coil.

## Description

### BACKGROUND OF THE INVENTION

Satellite and defense applications typically require gyros with high precision and long term stability over a variety of temperature environments. Reducing the environmentally induced errors improves the ability to maintain long term performance and enables uses over a wide variety of applications.

A fiber optic gyroscope measures angular velocity by comparing the phase difference created between light waves propagated clockwise and counterclockwise around a coil composed of fiber optic cable. The light waves originate from a light source that is coupled to the fiber, split, and directed down a clockwise propagating path and a counterclockwise propagating path. Thereafter, the counter-propagating light waves are recombined and made to impinge upon a photodetector that generates an output signal proportional to the intensity of the combined counterpropagating waves and the phase difference between the counterpropagating waves. The phase difference, and accordingly the angular velocity, is extracted by analyzing the photodetector output signal.

Therefore, for a gyroscope, phase difference is created under two circumstances, when the counterpropagating light waves travel unequal lengths around the fiber cable, and when the cable is rotated about the axis normal to the aperture created by the wound coil. In an ideal gyroscope with symmetrically designed propagating paths, the measurable phase shift between the counter-propagating light waves will directly correspond to the rotation induced phase shift between the counter-propagating waves. Moreover, zero rotation should correspond to zero phase shift between the counter-propagating waves.

Actual gyroscopes are not ideal. Gyroscopes are constructed with non-ideal components that impart errors to the angular velocity measuring capabilities of the gyroscope. Moreover, to affect the most cost-effective fiber gyroscope, it is common to compromise on component choices that can also introduce non-rotation induced phase shift errors into the measuring capabilities of the gyroscope.

Two types of unwanted phase shift errors are traceable to the non-ideal characteristics of gyroscope fiber. Amplitude type phase error and Intensity type phase error are traceable to the mixing of the light wave components from different polarization planes while the light waves traverse the same fiber cable. These phase errors are compounded when single mode type fiber is used to construct the fiber coil of the gyroscope.

Single mode (SM) type fiber is commonly used because it is less expensive than polarization maintaining (PM) type fiber. However, SM fiber is not the optimal fiber choice because SM fiber permits within a fiber cable the concurrent propagation of two or more light waves having the same phase constant in different polarization planes. The inability of the fiber to keep separate the light wave components can lead to both types of phase shift errors. Also, if the polarization planes of the oppositely propagating waves are not aligned when the light waves are recombined, the magnitude of the interference pattern will vary according to the cosine of the acute angle between the oppositely propagating wave polarization planes. Moreover, the high sensitivity of fiber cable to environmental variations such as temperature changes and vibrational stresses augments the problem of multiple polarization planes and unwanted phase shift errors.

Unwanted non-rotation induced phase shift errors can be reduced or eliminated by using a depolarizer in the gyroscope system. By depolarizing the light within a fiber cable, it is more likely that both counterpropagating light waves will encounter the same optical path. A depolarizer will distribute the intensity of each counter propagating light wave into an aggregation of partial lights with polarization planes distributed equally in all directions. Accordingly, the interference pattern developed from ideally depolarized light traversing counter-propagating paths will not vary according to polarization plane differences or misalignment because the interference pattern of the concurrent counter propagating waves will be independent of any respective concurrent counter propagating wave polarization plane.

One type of depolarizer, a Lyot fiber depolarizer includes coupled segments of PM fiber with the polarization axis of each PM segment aligned at a forty-five degree angle with respect to the polarization axis of the next segment of PM fiber. Additionally, the length of the depolarizer segments should be such that the propagation time of the light polarized along one axis compared to the propagation time of the light polarized along the orthogonal axis is greater than the coherence time of the light propagating there through. However, although depolarizers can help to minimize non-rotation induced phase shift errors, depolarizers can also be the source of non-rotation induced phase shift errors. Moreover, environmental variations subjected upon gyroscopes will often augment the problems associated with depolarizers.

In particular, when the design of both propagation paths within a Lyot depolarizer are less than exactly symmetrical, environmental variations can cause unpredictable effects on the depolarizer and ultimately, the measuring capability of the gyroscope. Accordingly, it is desirable to minimize the non-symmetries of gyroscope depolarizers.

To date, the art related to the current invention has not addressed the considerations necessary to design an environmentally robust depolarizer. More particularly, no related art has discussed or suggested the specific design considerations that are suggested by the current inventors to minimize the sensitivity of fiber depolarizers to environmental variations.

For instance, U.S. Pat. No. 5,136,667 issued to Ohno et al., U.S. Pat. No. 5,371,595 issued to Nishiura et al., U.S. Pat. No. 5,347,354, issued to Muller et al., U.S. Pat. No. 5,285,257 issued to Negishi et al., U.S. Pat. No. 5,526,115 issued to Nishiura, and U.S. Pat. No. 5,319,440 issued to Kersey et al., all discuss the use of fiber depolarizer in fiber optic gyroscopes. However, each of these patents merely teaches the use of depolarizers that is ordinary in the art. Moreover, each of these patents specifically does not mention fiber depolarizer design considerations that mitigate the effect of environmental variations.

Finally, U.S. Pat. No. 5,335,064 issued to Nishiura et al (hereinafter "Nishiura") teaches how to make a new type of depolarizer. Nishiura teaches how to make a depolarizer by gluing a polarization maintaining type of fiber segment to the end lead of a polarizer at an angle forty-five degree to the major axis of the polarizer fiber segment. Therefore, Nishiura teaches how to eliminate one segment of PM fiber in making a depolarizer, but does not teach or suggest a need to, or how to, improve the symmetry of a depolarizer, or affect enhanced environmental insensitivity of fiber depolarizers.

### SUMMARY OF THE INVENTION

A design for an environmentally robust fiber depolarizer for a fiber optic gyroscope (FOG) using high birefringence photonic crystal fiber is provided. This design can be used to reduce Shupe effect in a FOG, or to depolarize the light anywhere in the optical circuit of a FOG. The Shupe effect reduction depolarizers may be packaged apart from the FOG sense coil, or wound in a symmetric pattern on the outer diameter of the FOG sense coil

Photonic crystal PM fiber is less temperature and stress sensitive than conventional PM fiber, and has a much shorter beat-length. Using this fiber in depolarizers result in less fiber exposed to temperature and strain, as well as a lower performance impact from the temperature or strain.

It is an object of the present invention to provide fiber optic gyroscope designs that mitigate the effects of thermal variations and vibrational forces on rotation detection. It is another object of the invention to provide fiber optic gyroscope depolarizer designs that mitigate the effects of thermal variations and vibrational forces on rotation detection. It is yet another object of the invention to provide fiber optic gyroscope single mode fiber depolarizer designs that mitigate thermal variations and vibrational forces on rotation detection.

### BRIEF DESCRIPTION OF THE DRAWINGS

Preferred and alternative embodiments of the present invention are described in detail below with reference to the following drawings:
FIGURE 1 depicts a block diagram of a fiber gyroscope formed in accordance with an embodiment of the present invention;
FIGURE 2 depicts a coil resonator with fiber Lyot depolarizer; and
FIGURE 3 depicts a portion of fiber Lyot depolarizer formed in accordance with an embodiment of the present invention.

### DETAILED DESCRIPTION OF THE INVENTION

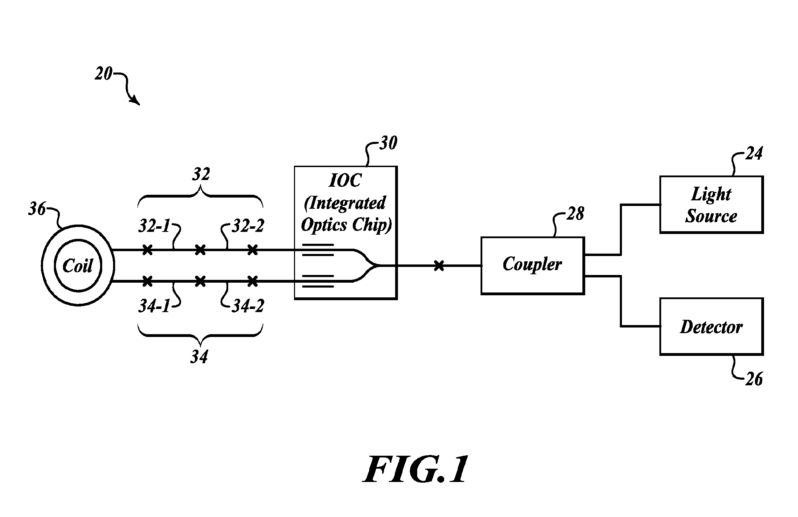

FIGURE 1 depicts a fiber optic gyroscope (FOG) 20. The FOG 20 includes an environmentally robust fiber depolarizer. The fiber depolarizer includes substantially equivalent clockwise and counterclockwise fiber leg sections 32, 34 wound in a symmetrical winding pattern around a coil 36 that is distally coupled at opposite ends to a gyroscope sensing coil 36. Specific attention to the design of the fiber depolarizer sections 32, 34 provides enhanced immunity to the stress of environmental variation.

To minimize the sensitivity of the fiber depolarizer 31 to environmental variations, the lengths of the counter propagating depolarizer fiber leg sections 32, 34 are preferably substantially equal in length. Moreover, for symmetry, the fiber depolarizer 31 includes at least one fiber depolarizer clockwise section 32 and at least one depolarizer counterclockwise section 34. Preferably however, each said propagation leg section 32, 34 will have at least two of depolarizer segments 32-1, 32-2, 34-1, 34-2.

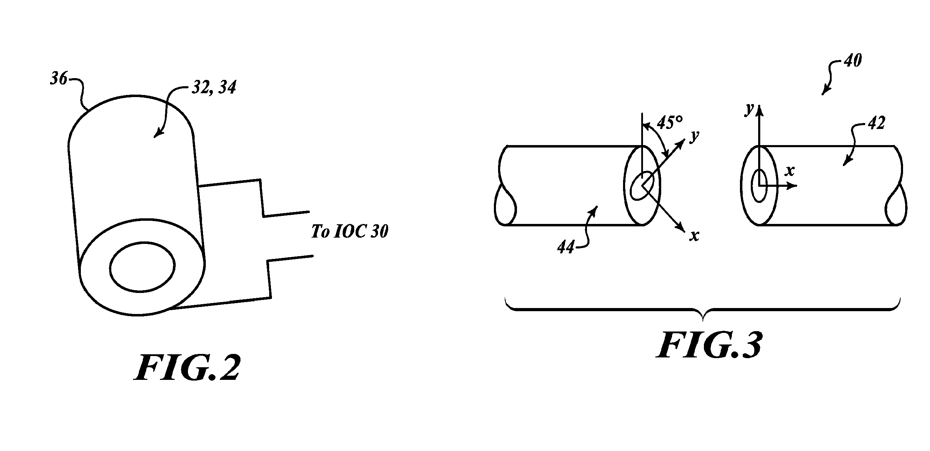

Another factor contributing to substantially equivalent fiber depolarizer sections 32, 34 is matched fiber designs in the propagating legs 32-1, 32-2 and 34-1, 34-2. Generally, the fiber depolarizer 31 is made entirely with polarization maintaining (PM) fiber segments. FIGURE 2 depicts two PM segments in the clockwise propagating leg 32, and in the counter clockwise propagating leg 34. Because the fiber depolarizer 31 is made entirely of PM segments, matched thermal expansion characteristics in the counterpropagating fiber legs 32, 34 may decrease sensitivities to environmental variations. Therefore, segments 32-1 and 32-2 should have the same fiber designs as segments 34-1 and 34-2. The fiber designs include substantially the same type of PM fiber, the same fiber coating, and the same length.

As shown in FIGURE 2, the depolarizer 31 with legs 32 and 34 are wound on the outside diameter of a FOG sense coil 36. United States Patent No. 6,211,963 illustrates various techniques for winding the sense coil 36 and the depolarizer legs 32 and 34. United States Patent No. 6,211,963 is hereby incorporated by reference.

As shown in FIGURE 3, two lengths of PM high-birefringent photonic crystal fiber 42 and 44 are spliced (e.g. fusion) together with their polarization axes aligned at 45 degrees. The resulting depolarizer is used to reduce signal fading in a fiber optic gyroscope.

In one embodiment, photonic crystal fiber having yields greater than 30 dB Polarization Extinction Ratio (PER) over 100 meters of fiber, with a maximum beat length (length required for 2 pi phase shift between the two propagation axes) of 4 mm are used. This describes the minimum birefringence acceptable. There is in theory no maximum acceptable limit.

The physical lengths of fibers 42 and 44 are determined by the minimum number of beat lengths required to depolarize the light in the optical circuit without creating delays that will interfere with other PM segments in the optical circuit. Generally, the short maximum beat length of the photonic crystal fibers 42 and 44 will ensure that their physical lengths are minimized - less fiber exposed to temperature and vibration fluctuations. The physical lengths of fibers 42 and 44 do not need to be equal in length. Their specific lengths are governed by the length determination above.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

The embodiments of the invention in which an exclusive property or privilege is claimed are defined as follows:

## Claims

1. A fiber optic gyroscope comprising:
a depolarizer comprising a clockwise propagating leg and a counterclockwise propagating leg, wherein each of said legs comprises a polarization maintaining (PM), photonic crystal fiber depolarizer segment; and
a gyroscope sensing coil, wherein each of said legs is wound in a winding pattern and wherein each of said legs is coupled to an end of said gyroscope sensing coil such that said fiber depolarizer is configured to mitigate the effect of environmental variations upon light travelling in said gyroscope sensing coil.

2. The fiber optic gyroscope of Claim 1, wherein said clockwise propagating leg and said counterclockwise propagating leg have substantially equivalent fiber coatings and are substantially equivalent in length.

3. The fiber optic gyroscope of Claim 2, wherein said clockwise propagating leg and said counterclockwise propagating leg are together encased within an encapsulant for the length of said legs on the outside diameter of the gyroscope sensing coil.

4. The fiber optic gyroscope of Claim 1, wherein at least one of said clockwise propagating leg or said counterclockwise propagating leg further comprises at least one single mode fiber segment having a fiber coating that is substantially thermally equivalent to polarization maintaining fiber segments of said clockwise propagating leg and said counterclockwise propagating leg.

5. The fiber optic gyroscope of Claim 4, wherein said clockwise propagating leg said counterclockwise propagating leg are together encased within an encapsulant for the length of said legs.

6. The fiber optic gyroscope of Claim1, wherein said winding pattern is a symmetrical winding pattern.

7. A fiber depolarizer comprising:
a clockwise propagating leg comprising a fiber depolarizer segment, wherein said clockwise propagating leg is coupled to a first end of a gyroscope sensing coil; and
a counterclockwise propagating leg comprising a second fiber depolarizer segment, wherein said counterclockwise propagating leg is coupled to a second end of said gyroscope sensing coil, wherein said clockwise propagating leg and said counterclockwise propagating leg are wound in a winding pattern to form a micro-coil structure, such that said fiber depolarizer mitigates the effect of environmental variations, wherein the legs comprise photonic crystal fiber.

8. The fiber depolarizer of Claim 7, wherein said clockwise propagating leg and said counterclockwise propagating leg have substantially equivalent fiber coatings and are substantially equivalent lengths.

9. The fiber depolarizer of Claim 7, wherein said clockwise propagating leg and said counterclockwise propagating leg are together encased within an encapsulant for the length of said legs on the outside diameter of said gyroscope sensing coil.

10. The fiber depolarizer of Claim 7, wherein at least one of said clockwise propagating leg or said counterclockwise propagating leg further comprises at least one single mode fiber segment having a fiber coating that is substantially thermally equivalent to polarization maintaining fiber segments of said clockwise propagating leg and said counterclockwise propagating leg.
